(19) Europäisches Patentamt / European Patent Office / Office européen des brevets

(11) **EP 4 206 272 A1**

(12) # EUROPEAN PATENT APPLICATION

(43) Date of publication:
05.07.2023 Bulletin 2023/27

(21) Application number: 22213077.5

(22) Date of filing: 13.12.2022

(51) International Patent Classification (IPC):
$C08K\ 3/36^{(2006.01)}$ $C08L\ 83/06^{(2006.01)}$
$C09D\ 5/00^{(2006.01)}$ $C09D\ 183/06^{(2006.01)}$

(52) Cooperative Patent Classification (CPC):
C09D 5/00; C08K 3/36; C08L 83/06; C09D 183/06

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 28.12.2021 JP 2021215599
31.05.2022 JP 2022098450

(71) Applicant: Kyushu High Tech. Co., Ltd
Kagoshima-shi, Kagoshima 8910115 (JP)

(72) Inventor: WAKIZONO, Satoshi
Kagoshima-shi, Kagoshima, 8910115 (JP)

(74) Representative: Isarpatent
Patent- und Rechtsanwälte Barth
Charles Hassa Peckmann & Partner mbB
Friedrichstrasse 31
80801 München (DE)

(54) **INORGANIC GLASS COATING AGENT**

(57) [Object] To provide an inorganic glass coating agent exhibiting stable drying and hardening properties not only under ordinary conditions but also under poor conditions by selecting an alkoxysilane having a relatively low molecular weight and low flash point, with high reactivity.

[Solution] An inorganic glass coating agent is composed mainly of an alkoxysilane and silane coupling agent, wherein the alkoxysilane is a trifunctional alkoxysilane, with a flash point of no higher than 40°C as equivalent to a class I petroleum and/or a class II petroleum, and a molecular weight of 180 or lower, and wherein at least one of the alkoxysilanes is present at 10 wt% to 80 wt%, where the total percentage of the alkoxysilanes and silane coupling agent is 100 wt%.

EP 4 206 272 A1

**Description**

[Technical Field]

The present invention relates to inorganic glass coating agents for the purpose of protecting various types of floors, such as PVC floorings (PVC flooring materials), stone materials, floorings, ceramic tiles, porcelain tiles and concrete. The invention further relates to inorganic glass coating agents containing not only water-soluble type coating agents but also solvent-based coating agents.

[Background Art]

Conventional inorganic glass coating agents for different types of floors are described in prior patent publications including patent documents filed by the present applicant such as (Japanese Patent No. 4957926) and Japanese Patent No. 6775171. It is well known from these prior patent publications that forming such coatings onto flooring materials provides a number of features, including producing a high-quality finish evocative of a glass-like film on the surface of the flooring material, eliminating the need for maintenance since the condition can be maintained for long periods, and also being better for the environment since waste liquid is not discharged. Their use throughout Japan is therefore increasing for many types of facilities, including supermarkets, commercial facilities, hospitals, elderly health facilities, school-related facilities, public facilities, shops and even domiciles. In recent years, increasing attention is being directed toward inorganic glass coating agents as environmentally-friendly maintenance systems, from the viewpoint of environmental problems and SDGs. With ever increasing use at a variety of facilities, however, it has often been the case that a stable finish cannot be obtained under the conditions existing during construction. For example, although the temperature conditions during construction are satisfactory in the summer season, the lower atmospheric temperature during winter produces a high drying/hardening (reactive) unstable state, while in the case of supermarkets, the areas around cold cases are significantly lower in temperature, likewise resulting in unstable drying and hardening. Moreover, construction must necessarily be carried out under highly humid conditions during the rainy season, resulting in unstable drying and hardening, and the fact remains that the drying and hardening (reactivity) of inorganic glass coating agents can become unstable depending on the temperature and humidity conditions during construction. Furthermore, in the case of suction-type flooring materials such as concrete floors or granite floors, the coating agent becomes sucked into the base material, tending to result in significantly unstable drying and hardening. Under ordinary conditions (satisfactory temperature and humidity conditions) it is possible to obtain the original coating film properties from about 1 to 3 days after construction (next-day properties of hardness of 3H or greater or resistance against various chemicals), with no particular problems during use, but under the poor conditions mentioned above (low temperature or high-humidity conditions), more time (such as a period of 2 weeks to 2 months) is required to obtain the original coating film properties, and any exposure to heavy walking or solutions during that time may result in deterioration of gloss or infiltration of the solutions into the coating film, making it impossible to exhibit the original protective film properties.

[Prior Art]

In Patent Document 1 (Japanese Patent No. 4957926), the present applicant has described "a chemical floor protecting, flexibilizing ordinary temperature-curing inorganic substance coating agent comprising a main component which is a mixture of a polyorganosiloxane comprising an alkoxysilane mixture in which at least one or more of the alkoxysilanes are tetrafunctional and/or trifunctional alkoxysilanes and ultrafine colloidal silica with a mean diameter of 5 to 20 nm, with addition of a silicone alkoxy oligomer and/or bifunctional alkoxysilane, a silane coupling agent as a binder between the ultrafine silica and alkoxysilane, a phosphoric acid-based catalyst or titanium-based catalyst as a catalyst, and an ion conductor to improve the static electrical characteristics of the coating film", wherein it is explained that the invention "provides a chemical floor protecting, flexibilizing ordinary temperature-curing inorganic substance coating agent that serves for the purpose of chemical floor protection of P-tiles or PVC sheets, imparts softness (flexibility), increases adhesiveness and prevents cracking and peeling, while also maintaining its original high hardness, high self-liquidity and high gloss, and having a low electrification resistance value".

However, Patent Document 1 does not describe "an inorganic glass coating agent composed mainly of an alkoxysilane and silane coupling agent, wherein the alkoxysilane is a trifunctional alkoxysilane, with a flash point of no higher than 40°C as equivalent to a class I petroleum and/or a class II petroleum, and a molecular weight of 180 or lower, and wherein at least one of the alkoxysilanes is present at 10 wt% to 80 wt%, where the total percentage of the alkoxysilanes and silane coupling agent is 100 wt%, or the inorganic glass coating agent according to claim 1 wherein the silane coupling agent comprises at least one epoxy group silane coupling agent, at a content of 10 wt% to 80 wt% where the total percentage of the alkoxysilanes and silane coupling agent is 100 wt%, or the inorganic glass coating agent wherein the alkoxysilane and silane coupling agent composed mainly of a trifunctional alkoxysilane and an epoxy group silane coupling agent is mixed with aqueous and/or solvent-based colloidal silica, water and/or a solvent as a diluting solvent, and a catalyst", as according to the present invention. It has therefore been the case that, for example, although the temperature conditions during construction are satisfactory in the summer season, the lower atmospheric temperature during winter produces a high drying/hardening (reactive) unstable state, while in the case of supermarkets, the areas around cold cases are significantly lower in temperature, likewise resulting in unstable drying and hardening. Moreover, construction must necessarily be carried out under highly humid conditions during the rainy season, resulting in unstable drying and hardening, and the fact remains that the drying and hardening (reactivity) of inorganic glass coating agents can become unstable depending on the temperature and humidity conditions during construction. Furthermore, in the case of suction-type flooring materials such as concrete floors or granite floors, the coating agent becomes sucked into the base material, tending to result in significantly unstable drying and hardening. The present invention is therefore difficult to conjecture based on Patent Document 1.

In Patent Document 2 (Japanese Patent No. 6065247), the present applicant has also described "a coating method for laminated inorganic protective-coated vinyl chloride tiles, which comprise laminated inorganic protective-coated vinyl chloride tiles having a vitreous inorganic protective coating layer formed on the surface of the vinyl chloride tiles, the top coat layer having a pencil hardness equivalent to 10H or greater as measured based on correlation data for a pencil hardness test and a wear resistance test, and wherein warping of the tile edges that occurs on the vinyl chloride tile base material side by contraction during crosslinking reaction (condensation reaction), when the vitreous layer hardens after coating treatment, is no greater than 1 mm, the laminated inorganic protective-coated vinyl chloride tiles being treated by laminated inorganic protective coating of at least an undercoat layer, an intermediate coat layer and a top coat layer on the surfaces of the vinyl chloride tiles, wherein the undercoat layer has a hardness of 3H to 6H and a thickness of 20 $\mu$m to 50 $\mu$m, the intermediate coat layer has a hardness of 6H to 9H and a thickness of 10 $\mu$m to 40 $\mu$m and the top coat layer has a hardness equivalent to 10H or greater and a thickness of 3 $\mu$m to 20 $\mu$m", wherein it is explained that "it is assumed that the inorganic protective top coating layer formed on the vinyl chloride tiles must have a high hardness specification of 10H or greater, has no cracking of the film, and has tile warping of no greater than 1 mm when the coating agent undergoes hardening shrinkage. Cracking is unlikely to occur unless the tiles undergo warping. Experience has shown that the degree of cracking can be kept within 1% if the amount of deformation is no greater than 1 mm. It is thereby possible to provide a laminated inorganic protective-coated vinyl chloride tile wherein an ultrahard film can be formed on vinyl chloride tiles without sacrificing the softness of the vinyl chloride tiles, which are vinyl-based floor tiles that exhibit the features associated with ceramic tiles including high hardness, abrasion resistance, long-term gloss persistence, maintenance-free upkeep and environmental suitability (no requirement for waste liquid disposal), along with the features associated with vinyl-based floor tiles including low cost, versatility (for new stores, renovated stores and existing stores), suitability for high floors, improved walkability, resistance to fall accidents and prolonged aesthetic quality, with softness imparted that is able to follow deformation and impact on the tiles themselves during use under walking or under carts or trucks".

However, Patent Document 2 does not describe "an inorganic glass coating agent composed mainly of an alkoxysilane and silane coupling agent, wherein the alkoxysilane is a trifunctional alkoxysilane, with a flash point of no higher than 40°C as equivalent to a class I petroleum and/or a class II petroleum, and a molecular weight of 180 or lower, and wherein at least one of the alkoxysilanes is present at 10 wt% to 80 wt%, where the total percentage of the alkoxysilanes and silane coupling agent is 100 wt%, or the inorganic glass coating agent according to claim 1 wherein the silane coupling agent comprises at least one epoxy group silane coupling agent, at a content of 10 wt% to 80 wt% where the total percentage of the alkoxysilanes and silane coupling agent is 100 wt%, or the inorganic glass coating agent wherein the alkoxysilane and silane coupling agent composed mainly of a trifunctional alkoxysilane and an epoxy group silane coupling agent is mixed with aqueous and/or solvent-based colloidal silica, water and/or a solvent as a diluting solvent, and a catalyst", as according to the present invention. It has therefore been the case that, for example, although the temperature conditions during construction are satisfactory in the summer season, the lower atmospheric temperature during winter produces a high drying/hardening (reactive) unstable state, while in the case of supermarkets, the areas around cold cases are significantly lower in temperature, likewise resulting in unstable drying and hardening. Moreover, construction must necessarily be carried out under highly humid conditions during the rainy season, resulting in unstable drying and hardening, and the fact remains that the drying and hardening (reactivity) of inorganic glass coating agents can become unstable depending on the temperature and humidity conditions during construction. Furthermore, in the case of suction-type flooring materials such as concrete floors or granite floors, the coating agent becomes sucked into the base material, tending to result in significantly unstable drying and hardening. The present invention is therefore difficult to conjecture based on Patent Document 2.

In Patent Document 3 (Japanese Patent No. 6065247), the present applicant has described "a main component that includes a polyorganosiloxane comprising an alkoxysilane mixture in which at least one of the alkoxysilanes is a tetrafunctional and/or trifunctional alkoxysilane, and ultrafine colloidal silica with a mean particle diameter of 5 to 20 nm, having a silane coupling agent with an epoxy functional group, with the polyorganosiloxane at 30 to 50 wt%, the silane coupling agent at 5 to 20 wt% and the ultrafine colloidal silica at 20 to 40 wt%, with addition of phosphoric acid or the like at a weight ratio of 0.1 to 5.0 wt%, as a catalyst to increase reactive curing, or a titanium-based catalyst and/or aluminum-based catalyst at a weight ratio of 0.1 to 20.0 wt%, with respect to a weight ratio of 100", wherein the following is explained in detail: "[Object] To provide a maintenance-free stone tile with a gloss of 80 or greater, having on the surface a coating layer that is an ultrahard coating film with a pencil hardness equivalent to 12H or greater, and that exhibits satisfactory water resistance, antifouling properties, slidability and adhesiveness and is free of cracking".

However, Patent Document 3 does not describe "an inorganic glass coating agent composed mainly of an alkoxysilane and silane coupling agent, wherein the alkoxysilane is a trifunctional alkoxysilane, with a flash point of no higher than 40°C as equivalent to a class I petroleum and/or a class II petroleum, and a molecular weight of 180 or lower, and wherein at least one of the alkoxysilanes is present at 10 wt% to 80 wt%, where the total percentage of the alkoxysilanes and silane coupling agent is 100 wt%, or the inorganic glass coating agent according to claim 1 wherein the silane coupling agent comprises at least one epoxy group silane coupling agent, at a content of 10 wt% to 80 wt% where the total percentage of the alkoxysilanes and silane coupling agent is 100 wt%, or the inorganic glass coating agent wherein the alkoxysilane and silane coupling agent composed mainly of a trifunctional alkoxysilane and an epoxy group silane coupling agent is mixed with aqueous and/or solvent-based colloidal silica, water and/or a solvent as a diluting solvent, and a catalyst", as according to the present invention. It has therefore been the case that, for example, although the temperature conditions during construction are satisfactory in the summer season, the lower atmospheric temperature during winter produces a high drying/hardening (reactive) unstable state, while in the case of supermarkets, the areas around cold cases are significantly lower in temperature, likewise resulting in unstable drying and hardening. Moreover, construction must necessarily be carried out under highly humid conditions during the rainy season, resulting in unstable drying and hardening, and the fact remains that the drying and hardening (reactivity) of inorganic glass coating agents can become unstable depending on the temperature and humidity conditions during construction. Furthermore, in the case of suction-type flooring materials such as concrete floors or granite floors, the coating agent becomes sucked into the base material, tending to result in significantly unstable drying and hardening. The present invention is therefore difficult to conjecture based on Patent Document 3.

In Patent Document 4 (Japanese Patent No. 6775171), the present applicant has described "a flame-retardant chemical flooring aqueous protective coating agent composed mainly of a mixture of 20 wt% to 50 wt% of a polyorganosiloxane comprising a mixture of an alkoxysilane and silane coupling agent and its hydrolytic condensate, wherein the alkoxysilane and silane coupling agent is either trifunctional or bifunctional, 30 wt% to 60 wt% of colloidal silica with a mean particle diameter of 5 nm to 25 nm, and 0.2 wt% to 2.0 wt% of an acid-based catalyst such as phosphoric acid as a catalyst, with the coating agent as 100 wt%, and containing absolutely no flammable solvent or alcohol as a diluting solvent", wherein it is explained that "it is possible to provide a flame-retardant chemical flooring having a glossiness of 80 or greater, a pencil hardness of 10H or greater, a slide property of 0.6 or greater when dry and 0.5 or greater when wet, containing absolutely no combustible solvent, and with vast improvements in terms of flammability risk, handling and storage, legal regulations for transport, and human toxicity of volatile components such as solvents, in comparison to conventional types of tiles. The flash point is 80°C or higher and preferably 100°C or higher".

However, Patent Document 4 does not describe "an inorganic glass coating agent composed mainly of an alkoxysilane and silane coupling agent, wherein the alkoxysilane is a trifunctional alkoxysilane, with a flash point of no higher than 40°C as equivalent to a class I petroleum and/or a class II petroleum, and a molecular weight of 180 or lower, and wherein at least one of the alkoxysilanes is present at 10 wt% to 80 wt%, where the total percentage of the alkoxysilanes and silane coupling agent is 100 wt%, or the inorganic glass coating agent according to claim 1 wherein the silane coupling agent comprises at least one epoxy group silane coupling agent, at a content of 10 wt% to 80 wt% where the total percentage of the alkoxysilanes and silane coupling agent is 100 wt%, or the inorganic glass coating agent wherein the alkoxysilane and silane coupling agent composed mainly of a trifunctional alkoxysilane and an epoxy group silane coupling agent is mixed with aqueous and/or solvent-based colloidal silica, water and/or a solvent as a diluting solvent, and a catalyst", as according to the present invention. It has therefore been the case that, for example, although the temperature conditions during construction are satisfactory in the summer season, the lower atmospheric temperature during winter produces a high drying/hardening (reactive) unstable state, while in the case of supermarkets, the areas around cold cases are significantly lower in temperature, likewise resulting in unstable drying and hardening. Moreover, construction must necessarily be carried out under highly humid conditions during the rainy season, resulting in unstable drying and hardening, and the fact remains that the drying and hardening (reactivity) of inorganic glass coating agents can become unstable depending on the temperature and humidity conditions during construction. Furthermore, in the case of suction-type flooring materials such as concrete floors or granite floors, the coating agent becomes sucked into the base material, tending to result in significantly unstable drying and hardening. The present invention is therefore difficult to conjecture based on Patent Document 4.

[Technical Problem]

The object of the present invention is to solve the problems mentioned above by providing an inorganic glass coating agent composed mainly of an alkoxysilane and silane coupling agent, wherein the alkoxysilane is a trifunctional alkoxysilane, with a flash point of no higher than 40°C as equivalent to a class I petroleum and/or a class II petroleum, and a molecular weight of 180 or lower, and wherein at least one of the alkoxysilanes is present at 10 wt% to 80 wt%, where the total percentage of the alkoxysilanes and silane coupling agent is 100 wt%, or the inorganic glass coating agent according to claim 1 wherein the silane coupling agent comprises at least one epoxy group silane coupling agent, at a content of 10 wt% to 80 wt% where the total percentage of the alkoxysilanes and silane coupling agent is 100 wt%, or the inorganic glass coating agent wherein the alkoxysilane and silane coupling agent composed mainly of a trifunctional alkoxysilane and an epoxy group silane coupling agent is mixed with aqueous and/or solvent-based colloidal silica, water and/or a solvent as a diluting solvent, and a catalyst.

[Solution to Problem]

The invention of claim 1 provides an inorganic glass coating agent composed mainly of an alkoxysilane and silane coupling agent, wherein the alkoxysilane is a trifunctional alkoxysilane, with a flash point of no higher than 40°C as equivalent to a class I petroleum and/or a class II petroleum, and a molecular weight of 180 or lower, and wherein at least one of the alkoxysilanes is present at 10 wt% to 80 wt%, where the total percentage of the alkoxysilanes and silane coupling agent is 100 wt%.

According to the invention, by selecting an alkoxysilane having a relatively low molecular weight and low flash point, with high reactivity, it is possible to provide stabilized drying and hardening properties not only under ordinary conditions but also under poor conditions.

The invention of claim 2 provides the inorganic glass coating agent according to claim 1 wherein the silane coupling agent comprises at least one epoxy group silane coupling agent, at a content of 10 wt% to 80 wt% where the total percentage of the alkoxysilanes and silane coupling agent is 100 wt%.

While the drying and hardening properties of the coating agent are improved and stabilized drying and hardening properties can be obtained even with a suction-type flooring material under low temperature, high-humidity conditions according to claim 1 of the invention, there is still a need to reduce whitening and cracking caused by rapid hardening shrinkage, or to compensate for weakening of the coating film itself, while the performance of the coating film can be greatly improved especially by using one or more epoxy group silane coupling agents to compensate for the static electrical characteristics, recoat properties and wet/dry slidability.

The invention of claim 3 provides the inorganic glass coating agent according to any one of claims 1 and 2, wherein the alkoxysilane and silane coupling agent composed mainly of a trifunctional alkoxysilane and an epoxy group silane coupling agent is mixed with aqueous and/or solvent-based colloidal silica, water and/or a solvent as a diluting solvent, and a catalyst.

According to this invention it is possible to provide an inorganic glass coating agent having a next-day hardness of 3H or greater, and also next-day solution resistance (water resistance, alcohol resistance, acid resistance and alkali resistance)," even under low temperature, high-humidity conditions.

The inventions of claim 1 to claim 3 include water-soluble type coating agents and solvent-type coating agents, where a water-soluble type coating agent is an inorganic glass coating agent containing as little solvent as possible and being composed of the aforementioned alkoxysilane and silane coupling agent, and as necessary, water-soluble colloidal silica, water and a catalyst such as phosphoric acid, in admixture. For a solvent-type coating agent, the method may be addition of the alkoxysilane and silane coupling agent, and as necessary solvent-based colloidal silica, alcohol or the like as a diluting solvent, and a catalyst such as phosphoric acid, or an aminosilane added as a catalyst, and reaction, drying and hardening of the mixture. In either case, the basic composition is the aforementioned alkoxysilane and silane coupling agent, with addition of aqueous and/or solvent-based colloidal silica, a diluting solvent such as water or alcohol, and phosphoric acid or the like as a catalyst.

For the inventions described above, focus is on the alkoxysilane and silane coupling agent as the main component to improve drying and hardening during construction, whereby a stable finish can be obtained under various conditions including low temperature conditions and high-humidity conditions, and also with suction-type flooring materials.

[Citation List]

[Patent Document 1] Japanese Patent Publication No. 4957926
[Patent Document 2] Japanese Published Unexamined Patent Application No. 2016-210670
[Patent Document 3] Japanese Patent Publication No. 6065247
[Patent Document 2] Japanese Patent Publication No. 6775171

Tables 1 and 2 show the results for drying property and next-day hardening property (next-day hardness) as conventional material specifications under different temperature and humidity conditions. First, Table 1 shows drying property and next-day hardness values under different temperature conditions during construction, indicating that a relatively stable drying property is obtained if the temperature conditions during construction are 20°C or higher, with a next-day hardness of 3H or greater also being obtained, but that drying is delayed and the next-day hardness value falls below 3H at 15°C or lower. At 10°C the drying property becomes highly unstable, with a required drying time of 90 minutes and a next-day hardness of only 1H. At 5°C or lower, the reactivity and hardening properties of the siloxane bonds themselves become fundamentally unstable, coming close to the limits for use of the material.

Table 1

| Room temperature | Touch-drying time (min) | Next-day hardness |
| --- | --- | --- |
| 35°C | 15 min. | 4H |
| 30°C | 20 min. | 4H |
| 25°C | 30 min. | 3H |
| 20°C | 35 min. | 3H |
| 15°C | 45 min. | 2H |
| 10 °C | 90 min. | 1H |
| 5°C | 120 min. | B |

- Measured with fixed humidity of 50%.
- Measured by JIS pencil hardness test after coating onto glass plate.

Table 2 shows drying times and next-day hardness values at different humidities. The drying and hardening properties were relatively superior under low-humidity conditions while the drying time was 15 to 30 minutes and the next-day hardness was also 3H or greater at humidity of 50% or lower, with the drying property being significantly delayed and the next-day hardness falling below 3H at 70% or higher.

Table 2

| Humidity | Touch-drying time (min) | Next-day hardness |
| --- | --- | --- |
| 35% or lower | 15 min. | 5H |
| 40% | 20 min. | 4H |
| 50% | 30 min. | 3H |
| 60% | 35 min. | 3H |
| 70% | 45 min. | 2H |
| 80% | 90 min. | 1H |
| 85% or higher | 120 min. | B |

- Measured with fixed temperature of 25°C (room temperature).
- Measured by JIS pencil hardness test after coating onto glass plate.

The results demonstrate that lower temperature and higher humidity during construction result in more unstable properties of drying and hardening (next-day hardness) of the coating agent.
Table 3 shows drying properties and hardening properties (next-day hardness) for different flooring materials. The test results clearly show a trend toward superior drying and hardening properties for flooring materials having lower suction. Glass sheet floors and granite mirror surface floors, as well as ceramic tile mirror surface floors, have more rapid drying and high next-day hardnesses of 4H to 5H, whereas concrete floors suck coating agents into the concrete due to their strong suction property, requiring more time for drying and hardening.

Table 3

| Base material | Touch-drying time (min) | Next-day hardness |
|---|---|---|
| Glass sheet | 15 min. | 5H |
| Granite mirror surface | 20 min. | 5H |
| Granite burner finishing | 35 min. | 4H |
| Ceramic tile mirror surface | 20 min. | 5H |
| Ceramic tile matte | 30 min. | 4H |
| Concrete | 60 min. | 2H |
| *Flooring (plywood) | 20 min. | 2H |
| *PVC (homogeneous tile) | 20 min. | 1H |

- Measured with fixed temperature of 25°C (room temperature) and fixed humidity of 50%.
- Flooring and PVC flooring were coated with an undercoat.

As shown above, glass sheet, granite and ceramic tiles which have low suction exhibit excellent drying properties and also high hardness with next-day hardness of 3H or greater, whereas concrete floors require longer drying time and also have next-day hardness of below 3H, indicating that suction-type flooring materials exhibit delayed drying and hardening. On the other hand, "*Flooring" and "*PVC" tiles that lack suction exhibit superior drying properties but also have next-day hardnesses of below 3H, which is believed to be due to the undercoat and also due to the softness of the flooring materials themselves that contribute to low hardness values.

Thus, conventional material specifications indicate more unstable drying and hardening and greater tendency for a next-day hardness of 3H or below, the lower the temperature conditions during construction, the higher the humidity during construction, and the stronger the suction property of the flooring material. Construction under such conditions can therefore result in lack of hardness, gloss deterioration when exposed to walking and inadequate solution resistance (water resistance, alcohol resistance, acid resistance, alkali resistance, oil resistance and chemical resistance) of the coating film which leads to infiltration by such solutions. In addition, since a period of 2 weeks to 2 months is required to obtain adequate coating film properties, problems may occur during that period, such as gloss deterioration when exposed to walking or damage due to solution infiltration.

Focus has therefore been on selecting the alkoxysilane and silane coupling agents, and especially the alkoxysilane as the main component, as a measure against these problems. Basically, selection of a trifunctional alkoxysilane as the main component is necessary to obtain high hardness. For a trifunctional alkoxysilane, it is generally necessary to select an alkoxysilane with a low molecular weight and low flash point if the goal is to improve the drying/hardening properties. It is important for the silane coupling agent to have satisfactory compatibility with the alkoxysilane and aqueous and solvent-based colloidal silica, and satisfactory properties for a floor coating agent. Specifically, greater use of an alkoxysilane with a low flash point (alkoxysilane with a low molecular weight) will increase the potential for whitening and cracking to occur during hardening shrinkage, since hardening shrinkage (crosslinking reaction) will proceed more rapidly. This introduces the new problem of increasing material brittleness. When used as a flooring material, the static electrical characteristics and recoatability, as well as slidability under dry and wet conditions, are important factors from the standpoint of a floor coating agent, and these problems must therefore be overcome. It has therefore been necessary to study various different alkoxysilanes and silane coupling agents to determine the optimum values.

[Description of Embodiments]

An embodiment of the invention will now be described in detail. For development of the inorganic glass coating agent of the invention comprising an alkoxysilane and silane coupling agent, colloidal silica and a catalyst such as phosphoric acid, selection of the alkoxysilane and silane coupling agent is important. First, a trifunctional alkoxysilane must have a relatively low molecular weight, low flash point and high reactivity, as properties required for an alkoxysilane. Specific trifunctional alkoxysilanes that may be used include methyltrimethoxysilane, methyltriethoxysilane and n-propyltrimethoxysilane.

Table 4 shows Mixing Examples with parameters of flash point, hazardous material classification, molecular weight and content of major trifunctional alkoxysilanes, where the total percentage of the alkoxysilanes and silane coupling agent is 100 wt%.

Table 4

| Sample No. | Alkoxysilane (wt%) | | Flash point (°C) | Hazardous material classification | Molecular weight |
| --- | --- | --- | --- | --- | --- |
| | Type | Content | | | |
| 1 | Alkoxysilane A | 10 | 8 | Class I petroleum | 136 |
| 2 | | 30 | | | |
| 3 | | 50 | | | |
| 4 | | 80 | | | |
| 5* | | 90 | | | |
| 6* | Alkoxysilane B | 5 | 36 | Class II petroleum | 164 |
| 7 | | 10 | | | |
| 8 | | 40 | | | |
| 9 | | 70 | | | |
| 10* | | 85 | | | |
| 11 | Alkoxysilane C | 10 | 40 | Class II petroleum | 178 |
| 12 | | 30 | | | |
| 13 | | 60 | | | |
| 14 | | 80 | | | |
| 15* | | 90 | | | |
| 16* | Alkoxysilane D | 10 | 23 | Class II petroleum | 218 |
| 17* | | 30 | | | |
| 18* | | 60 | | | |
| 19* | | 80 | | | |
| 20* | | 95 | | | |
| 21* | Alkoxysilane E | 15 | 57 | Class II petroleum | 206 |
| 22* | | 35 | | | |
| 23* | | 60 | | | |
| 24* | | 80 | | | |
| 25* | | 95 | | | |
| A "*" symbol indicates that the sample falls outside of the range of the invention. | | | | | |

For each of the samples in Table 4, a coating agent was prepared according to conventional material specifications, comprising silane in an amount of 40 wt%, colloidal silica in an amount of 59 wt% (about 12% by solid weight) and phosphoric acid in an amount of 1 wt% based on a total coating agent content of 100 wt%, and coated onto a glass sheet under low temperature conditions (room temperature: 10°C, humidity: 50%) and high-humidity conditions (room temperature: 25°C, humidity: 80%), as poor conditions, and coated under ordinary conditions (room temperature: 25°C, humidity: 50%) onto a concrete floor having a strong suction property, and the drying time and next-day hardness value of each was measured, using parameters of differences in alkoxysilane flash point and molecular weight and contents, with the results shown in Table 5.

Table 5

| Sample No. | Alkoxysilane type | Low temperature | | High humidity | | Concrete floor | | Assessment |
|---|---|---|---|---|---|---|---|---|
| | | Touch-drying time (min) | Next-day hardness | Touch-drying time (min) | Next-day hardness | Touch-drying time (min) | Next-day hardness | |
| 1 | Alkoxysilane A | 45 | 3H | 50 | 3H | 40 | 3H | ○ |
| 2 | | 40 | 3H | 45 | 3H | 35 | 3H | ○ |
| 3 | | 30 | 4H | 35 | 4H | 30 | 3H | ○ |
| 4 | | 25 | 4H | 30 | 4H | 25 | 3H | ○ |
| 5* | | 20 | 1H | 25 | 2H | 25 | 1H | × |
| 6* | Alkoxysilane B | 55 | 2H | 65 | 2H | 65 | 2H | × |
| 7 | | 50 | 3H | 55 | 3H | 55 | 3H | ○ |
| 8 | | 40 | 3H | 50 | 4H | 50 | 3H | ○ |
| 9 | | 25 | 4H | 45 | 3H | 45 | 3H | ○ |
| 10* | | 30 | 1H | 35 | 2H | 40 | 2H | × |
| 11 | Alkoxysilane C | 55 | 3H | 55 | 3H | 60 | 3H | ○ |
| 12 | | 50 | 3H | 50 | 3H | 55 | 3H | ○ |
| 13 | | 45 | 4H | 45 | 3H | 50 | 3H | ○ |
| 14 | | 30 | 4H | 40 | 4H | 45 | 3H | ○ |
| 15* | | 25 | 2H | 35 | 2H | 40 | 2H | × |
| 16* | Alkoxysilane D | 75 | 1H | 75 | 1H | 70 | 1H | × |
| 17* | | 65 | 2H | 70 | 2H | 65 | 2H | × |
| 18* | | 60 | 3H | 65 | 2H | 60 | 2H | × |
| 19* | | 50 | 2H | 55 | 2H | 50 | 2H | × |
| 20* | | 45 | F | 50 | F | 50 | 1H | × |
| 21* | Alkoxysilane E | 90 | 1H | 90 | 1H | 80 | 1H | × |
| 22* | | 75 | 2H | 80 | 1H | 70 | 1H | × |
| 23* | | 70 | 2H | 80 | 2H | 65 | 2H | × |
| 24* | | 65 | 2H | 65 | 2H | 60 | 2H | × |
| 25* | | 50 | 2H | 60 | 1H | 55 | 1H | × |
| A "*" symbol indicates that the sample falls outside of the range of the invention.<br>- Assessments: ○, △, ×;<br>○ : All had touch-drying times of within 60 minutes and next-day hardnesses of 3H or greater.<br>× : One or more had a touch-drying time of 60 minutes or longer and a next-day hardness of below 3H. | | | | | | | | |

As shown by the results in Table 5, a trifunctional alkoxysilane having a lower flash point and a lower molecular weight of the alkoxysilane exhibits a more satisfactory drying property and higher next-day hardness. Specifically, if the proportion with a flash point of no higher than 40°C equivalent to a class I petroleum or class II petroleum and a molecular weight of 180 or lower is 10 wt% to 80 wt%, where the total percentage of the alkoxysilanes and silane coupling agent is 100 wt%, then even a concrete floor will dry within 60 minutes, with a next-day hardness of 3H or greater, at a room temperature of 10°C and humidity of 80%. By thus selecting and adding such an alkoxysilane it is possible to obtain stable drying and hardening properties even under low temperature, high-humidity conditions, and with suction-type flooring materials such as concrete.

It was confirmed, however, that the drying and hardening properties during construction and the next-day hardness were both improved as a result of the excellent drying and hardening properties of the alkoxysilane, although it is important to exhibit compatibility with the alkoxysilane and the aqueous and solvent-based colloidal silica, as well as exhibiting properties as a floor coating agent, as mentioned above. Specifically, it is necessary to provide effects of inhibiting whitening and cracking caused by rapid hardening shrinkage, improving brittleness and imparting flexibility, while also improving the properties required for a coating film such as recoatability, static electrical characteristics, solution resistance and slidability. Selection of the silane coupling agent was therefore considered. Specific silane coupling agents that were examined included epoxy group silane coupling agents [2-(3,4-epoxycyclohexyl)ethyltrimethoxysilane, 3-glycidoxypropylmethyldimethoxysilane, 3-glycidoxypropyltrimethoxysilane, 3-glycidoxypropylmethyldiethoxysilane and 3-glycidoxypropyltriethoxysilane], an acrylic group silane coupling agent [3-acryloxypropyltrimethoxysilane], vinyl group silane coupling agents [vinyltrimethoxysilane and vinyltriethoxysilane], amino group silane coupling agents [N-2-(aminoethyl)-3-aminopropylmethyldimethoxysilane, N-2-(aminoethyl)-3-aminopropyltrimethoxysilane, 3-aminopropyltrimethoxysilane and 3-aminopropyltriethoxysilane], and methacryl group silane coupling agents [3-methacryloxypropylmethyldimethoxysilane, 3-methacryloxypropyltrimethoxysilane, 3-methacryloxypropylmethyldiethoxysilane and 3-methacryloxypropyltriethoxysilane].

A particularly satisfactory alkoxysilane A was selected from among Tables 4 and 5, and Mixing Examples with different types and mixing amounts of different silane coupling agents as parameters were prepared as shown in Table 6. The total amounts of alkoxysilane A and each silane coupling agent were 90 to 95 wt%, with the remaining 5 to 10 wt% consisting of other alkoxysilanes or silane coupling agents and various additives.

Table 6

| Sample No. | Silane coupling agents (wt%) | | Alkoxysilane A (wt%) |
| | Type | Content | |
|---|---|---|---|
| 26 | Epoxy group silane coupling agent A | 10 | 80 |
| 27 | | 20 | 70 |
| 28 | | 40 | 50 |
| 29 | | 60 | 30 |
| 30 | | 80 | 10 |
| 31* | | 90 | 0 |
| 32* | Acrylic group silane coupling agent B | 10 | 80 |
| 33* | | 20 | 70 |
| 34* | | 50 | 40 |
| 35* | | 75 | 15 |
| 36* | | 95 | 0 |
| 37* | Vinyl group silane coupling agent C | 10 | 80 |
| 38* | | 20 | 70 |
| 39* | | 50 | 40 |
| 40* | | 75 | 15 |
| 41* | | 90 | 0 |
| 42* | Amino group silane coupling agent D | 10 | 80 |
| 43* | | 20 | 70 |
| 44* | | 50 | 40 |
| 45* | | 75 | 15 |
| 46* | | 95 | 0 |

(continued)

| Sample No. | Silane coupling agents (wt%) | | Alkoxysilane A (wt%) |
| --- | --- | --- | --- |
| | Type | Content | |
| 47* | | 10 | 80 |
| 48* | | 30 | 60 |
| 49* | Methacryl group silane coupling agent E | 60 | 30 |
| 50* | | 80 | 10 |
| 51* | | 95 | 0 |
| A "*" symbol indicates that the sample falls outside of the range of the invention. | | | |

For each of the samples listed in Table 6, a coating agent was prepared according to conventional material specifications, comprising silane in an amount of 40 wt%, colloidal silica in an amount of 59 wt% (about 12% by solid weight) and phosphoric acid in an amount of 1 wt% based on a total coating agent content of 100 wt%, and coated under low temperature conditions (room temperature: 10°C, humidity: 50%) and high-humidity conditions (room temperature: 25°C, humidity: 80%), as poor conditions, and the properties were evaluated about 24 hours after coating. The results are shown in Tables 7-1 to 7-4.

Table 7-1

| | | | | | | | | Low-temperature conditions | | | | | | |
|---|---|---|---|---|---|---|---|---|---|---|---|---|---|---|
| Sample No. | Silane coupling agents (wt%) | | Finish | Whitening/ cracking | Mar proofness test (toughness test) | Static electrical characteristic X ($10^X \Omega$) | Next-day hardness | Solution resistance | | | | Coefficient of slip resistance | | Assessment |
| | Type | Content | | | | | | Water | Alcohol | Acid | Alkali | Dry | Wet | |
| 26 | Epoxy group silane coupling agent A | 10 | Good | None | -9 | 9.9 | 3H | ○ | ○ | ○ | △ | 0.72 | 0.60 | ○ |
| 27 | | 20 | Good | None | -8 | 9.7 | 4H | ○ | ○ | ○ | △ | 0.75 | 0.61 | ○ |
| 28 | | 40 | Good | None | -5 | 9.5 | 5H | ○ | ○ | ○ | ○ | 0.77 | 0.62 | ○ |
| 29 | | 60 | Good | None | -4 | 9.2 | 4H | ○ | ○ | ○ | △ | 0.78 | 0.63 | ○ |
| 30 | | 80 | Good | None | -5 | 9.2 | 3H | ○ | ○ | ○ | △ | 0.80 | 0.64 | ○ |
| 31* | | 90 | Good | None | -15 | 9.1 | 2H | ○ | × | × | × | 0.81 | 0.64 | × |
| 32* | Acrylic group silane coupling agent B | 10 | Weak gloss | Whitening | -33 | 12.0 | 1H | △ | × | × | × | 0.75 | 0.45 | × |
| 33* | | 20 | Uneven gloss | None | -25 | 11.5 | 2H | ○ | △ | ○ | × | 0.79 | 0.50 | × |
| 34* | | 50 | Uneven gloss | None | -16 | 11.0 | 2H | ○ | ○ | ○ | △ | 0.83 | 0.55 | × |
| 35* | | 75 | Uneven gloss | None | -13 | 10.7 | 1H | △ | × | × | × | 0.85 | 0.60 | × |
| 36* | | 95 | Uneven gloss | None | -20 | 10.3 | F | △ | × | × | × | 0.88 | 0.63 | × |

(continued)

| Sample No. | Silane coupling agents (wt%) | | Finish | Whitening/ cracking | Mar proofness test (toughness test) | Static electrical characteristic X $(10^X\Omega)$ | Next-day hardness | Solution resistance | | | | Coefficient of slip resistance | | Assessment |
| --- | --- | --- | --- | --- | --- | --- | --- | --- | --- | --- | --- | --- | --- | --- |
| | Type | Content | | | | | | Water | Alcohol | Acid | Alkali | Dry | Wet | |
| 37* | Vinyl group silane coupling agent C | 10 | Weak gloss | Whitening | -38 | 12.5 | 1H | $\Delta$ | $\times$ | $\times$ | $\times$ | 0.74 | 0.60 | $\times$ |
| 38* | | 20 | Weak gloss | None | -35 | 12.0 | 2H | $\bigcirc$ | $\Delta$ | $\bigcirc$ | $\Delta$ | 0.77 | 0.62 | $\times$ |
| 39* | | 50 | Weak gloss | None | -30 | 11.7 | 1H | $\bigcirc$ | $\Delta$ | $\bigcirc$ | $\Delta$ | 0.80 | 0.63 | $\times$ |
| 40* | | 75 | Weak gloss | None | -24 | 11.5 | 1H | $\Delta$ | $\times$ | $\times$ | $\times$ | 0.83 | 0.65 | $\times$ |
| 41* | | 90 | Weak gloss | None | -35 | 11.3 | F | $\Delta$ | $\times$ | $\times$ | $\times$ | 0.90 | 0.66 | $\times$ |

Low-temperature conditions

A "*" symbol indicates that the sample falls outside of the range of the invention.

Table 7-2

| Sample No. | Silane coupling agents (wt%) | | Finish | Low-temperature conditions | | | | Solution resistance | | | | Coefficient of slip resistance | | Assessment |
|---|---|---|---|---|---|---|---|---|---|---|---|---|---|---|
| | Type | Content | | Whitening/ cracking | Mar proof- ness test (toughness test) | Static electrical characteristic X $(10^X\Omega)$ | Next-day hardness | Water | Alcohol | Acid | Alkali | Dry | Wet | |
| 42* | Amino group silane coupling agent D | 10 | Coating gelled | - | - | - | - | - | - | - | - | - | - | × |
| 43* | | 20 | Coating gelled | - | - | - | - | - | - | - | - | - | - | × |
| 44* | | 50 | Coating gelled | - | - | - | - | - | - | - | - | - | - | × |
| 45* | | 75 | Coating gelled | - | - | - | - | - | - | - | - | - | - | × |
| 46* | | 95 | Coating gelled | - | - | - | - | - | - | - | - | - | - | × |
| 47* | Methacryl group silane coupling agent E | 10 | Weak gloss | Whitening | -35 | 11.0 | 1H | △ | × | × | × | 0.77 | 0.50 | × |
| 48* | | 30 | Uneven gloss | None | -15 | 10.7 | 2H | ○ | △ | ○ | △ | 0.80 | 0.54 | × |
| 49* | | 60 | Uneven gloss | None | -10 | 10.3 | 2H | ○ | ○ | ○ | △ | 0.85 | 0.58 | × |
| 50* | | 80 | Uneven gloss | None | -20 | 10.1 | F | ○ | ○ | ○ | △ | 0.90 | 0.60 | × |
| 51* | | 95 | Uneven gloss | None | -30 | 9.9 | F | △ | × | × | × | 0.92 | 0.64 | × |

A "*" symbol indicates that the sample falls outside of the range of the invention.

Table 7-3

| Sample No. | Silane coupling agents (wt%) | | Finish | Whitening/ cracking | Mar proofness test (toughness test) | Static electrical characteristic X $(10^X\Omega)$ | Next-day hardness | Solution resistance | | | | Coefficient of slip resistance | | Assessment |
|---|---|---|---|---|---|---|---|---|---|---|---|---|---|---|
| | | | | | | | High-humidity conditions | | | | | | | |
| | Type | Content | | | | | | Water | Alcohol | Acid | Alkali | Dry | Wet | |
| 26 | Epoxy group silane coupling agent A | 10 | Good | None | -10 | 9.9 | 3H | ○ | ○ | ○ | Δ | 0.72 | 0.61 | ○ |
| 27 | | 20 | Good | None | -8 | 9.8 | 4H | ○ | ○ | ○ | Δ | 0.75 | 0.62 | ○ |
| 28 | | 40 | Good | None | -7 | 9.6 | 4H | ○ | ○ | ○ | ○ | 0.77 | 0.62 | ○ |
| 29 | | 60 | Good | None | -5 | 9.2 | 4H | ○ | ○ | ○ | Δ | 0.78 | 0.64 | ○ |
| 30 | | 80 | Good | None | -5 | 9.1 | 3H | ○ | ○ | ○ | Δ | 0.80 | 0.64 | ○ |
| 31* | | 90 | Good | None | -18 | 9.0 | 2H | ○ | × | × | × | 0.81 | 0.66 | × |
| 32* | Acrylic group silane coupling agent B | 10 | Weak gloss | Whitening | -32 | 11.8 | 1H | Δ | × | × | × | 0.75 | 0.45 | × |
| 33* | | 20 | Uneven gloss | None | -22 | 11.6 | 1H | ○ | Δ | ○ | × | 0.80 | 0.51 | × |
| 34* | | 50 | Uneven gloss | None | -15 | 11.2 | 2H | ○ | ○ | ○ | Δ | 0.83 | 0.56 | × |
| 35* | | 75 | Uneven gloss | None | -12 | 10.8 | 1H | Δ | × | × | × | 0.84 | 0.60 | × |
| 36* | | 95 | Uneven gloss | None | -20 | 10.5 | F | Δ | × | × | × | 0.88 | 0.62 | × |

| Sample No. | Silane coupling agents (wt%) | | Finish | Whitening/ cracking | Mar proofness test (toughness test) | Static electrical characteristic X $(10^X\Omega)$ | Next-day hardness | Solution resistance | | | | Coefficient of slip resistance | | Assessment |
|---|---|---|---|---|---|---|---|---|---|---|---|---|---|---|
| | | | | | | | | | | | | High-humidity conditions | | |
| | Type | Content | | | | | | Water | Alcohol | Acid | Alkali | Dry | Wet | |
| 37* | Vinyl group silane coupling agent C | 10 | Weak gloss | Whitening | -35 | 12.2 | 1H | △ | × | × | × | 0.73 | 0.61 | × |
| 38* | | 20 | Weak gloss | None | -33 | 12.0 | 2H | ○ | △ | ○ | △ | 0.76 | 0.60 | × |
| 39* | | 50 | Weak gloss | None | -30 | 11.8 | 1H | ○ | △ | ○ | △ | 0.78 | 0.62 | × |
| 40* | | 75 | Weak gloss | None | -22 | 11.6 | F | △ | × | × | × | 0.83 | 0.65 | × |
| 41* | | 90 | Weak gloss | None | -33 | 11.2 | F | △ | × | × | × | 0.88 | 0.67 | × |

A "*" symbol indicates that the sample falls outside of the range of the invention.

Table 7-4

| Sample No. | Silane coupling agents (wt%) | | Finish | Whitening/ cracking | Mar proofness test (toughness test) | Static electrical characteristic X $(10^X\Omega)$ | Next-day hardness | Solution resistance | | | | Coefficient of slip resistance | | Assessment |
|---|---|---|---|---|---|---|---|---|---|---|---|---|---|---|
| | Type | Content | | | | | | Water | Alcohol | Acid | Alkali | Dry | Wet | |
| 42* | Amino group silane coupling agent D | 10 | Coating gelled | - | - | - | - | - | - | - | - | - | - | × |
| 43* | | 20 | Coating gelled | - | - | - | - | - | - | - | - | - | - | × |
| 44* | | 50 | Coating gelled | - | - | - | - | - | - | - | - | - | - | × |
| 45* | | 75 | Coating gelled | - | - | - | - | - | - | - | - | - | - | × |
| 46* | | 95 | Coating gelled | - | - | - | - | - | - | - | - | - | - | × |
| 47* | Methacryl group silane coupling agent E | 10 | Weak gloss | Whitening | -36 | 11.2 | 1H | Δ | × | × | × | 0.78 | 0.51 | × |
| 48* | | 30 | Uneven gloss | None | -13 | 10.8 | 2H | ○ | Δ | ○ | Δ | 0.81 | 0.53 | × |
| 49* | | 60 | Uneven gloss | None | -10 | 10.5 | 1H | ○ | ○ | ○ | Δ | 0.87 | 0.59 | × |
| 50* | | 80 | Uneven gloss | None | -15 | 10.3 | 1H | ○ | ○ | ○ | Δ | 0.92 | 0.60 | × |
| 51* | | 95 | Uneven gloss | None | -25 | 10.0 | F | Δ | × | × | × | 0.93 | 0.63 | × |

A "*" symbol indicates that the sample falls outside of the range of the invention.

- The finish and the presence or absence of whitening and cracking were determined by visual observation of the outer appearance after applying the coating agent to vinyl chloride flooring tiles and confirming dryness to the touch.
- A mar proofness test was carried out instead of the toughness evaluation test. The mar proofness test was carried out by a scratch test with 10 back and forth passes using a wire brush with an approximately 750 g weight, judging the state of gloss deterioration (gloss value after marring - gloss value before marring). A score of 10 points or less was judged as satisfactory gloss deterioration.
- The static electrical characteristic (surface resistivity) was determined using a surface resistivity tester (YC-103), with 5 measurements each and recording the average value (X represents the 10-based index, and therefore the surface resistivity is $10^X\Omega$). The obtained static electrical characteristic (surface resistivity) was judged to be satisfactory at $\leq 1 \times 10^{10}\Omega$, as a level where static electricity is no longer sensed based on empirical data.
- The pencil hardness was based on JIS K5600. A sample prepared by coating onto a glass sheet or metal fragment was anchored on a horizontal stage with the coated surface facing upward, and a pencil was held at an angle of about 45° and used to scratch the coated surface while pressing it as firmly as possible against the coated surface without breaking the lead core, along a length of about 1 cm at a uniform speed in the forward direction from the tester. The hardest pencil that did not cause breakage of the coated surface was recorded as the hardness number. A pencil hardness of 3H about 24 hours after construction has been empirically shown to be able to withstand damage due to abrasion by walking.
- The solution resistance values were confirmed by the method of JIS K5600, for water resistance (deionized water, liquid resistance; drip infusion method), alcohol resistance (70% ethanol, liquid resistance; drip infusion method), acid resistance (10% hydrochloric acid, liquid resistance; drip infusion method) and alkali resistance (saturated sodium hydroxide solution, liquid resistance; absorption medium method). An absorber disc exposed to test solution by dropping or soaking was set on the test piece and allowed to stand for 1 hour, after which it was removed and thoroughly washed. Blistering and coating film damage were immediately observed, and the evaluation assignment was "∘" if the condition was unchanged from before evaluation, "Δ" if the condition changed but was restored to the original condition during a recovery period of 24 hours, or "×" if the condition changed to blistering, peeling or the like without restoration to the original condition during the recovery period. The overall judgment is satisfactory if 3 or more are evaluated as "∘", 1 or fewer as "Δ" and none as "×".
- The slidability test was conducted according to the Resilient Polymer Floor Coverings Test Method of JIS A1454. A vinyl chloride flooring tile is coated with the coating agent to produce a sample, and a portable pull slip meter (ONO·PPSM) is used to measure the tensile force (P) when pulling a sliding piece (rubber sheet with hardness: A80, thickness: 5 mm) over the test piece in a clean and dry state and in a wet state, recording the maximum tensile force (Pmax) to be the maximum value generated when the sliding piece begins to slide, and calculating the coefficient of slip resistance (C.S.R). Satisfactory evaluation is 0.7 to 0.8 in a dry state and 0.6 to 0.8 in a wet state.

```
Coefficient of slip resistance (C.S.R) = Maximum tensile

force (Pmax)/vertical force: 785 N (W)
```

- The assessments of "o" in Table 7-1 to Table 7-4 indicate "satisfactory finish, crack resistance, toughness (mar proofness), static electrical characteristic, pencil hardness, solution resistance and slidability", and the assessments of "×" indicate "problem with any one of finish, crack resistance, toughness (mar proofness), static electrical characteristic, pencil hardness, solution resistance or slidability".

As mentioned above, in the test results with different silane coupling agents as parameters, only the epoxy group silane coupling agents exhibited satisfactory results for all evaluations including finish, presence or absence of whitening or cracking, mar proofness testing, static electrical characteristic, next-day hardness, various solution resistance testing and slide properties under dry and wet conditions. Although coating films formed with the vinyl group silane coupling agents, the acrylic group silane coupling agent and the methacryl group silane coupling agents, the evaluations for mar proofness testing, static electrical characteristic, hardness and solution resistance testing were all inferior compared to the epoxy group silane coupling agents. The amino group silane coupling agents formed an unsuitable gel due to the use of phosphoric acid as the catalyst. The most favorable results were therefore obtained with epoxy group silane coupling agents, the most satisfactory results being obtained with contents of 10 wt% to 80 wt%.

The results described above demonstrate that the inorganic glass coating agent is preferably one wherein the alkoxysilane is a trifunctional alkoxysilane, with a flash point of no higher than 40°C as equivalent to a class I petroleum and/or a class II petroleum and a molecular weight of 180 or lower, and wherein the content of the alkoxysilane is 10 wt% to 80 wt%, where the total percentage of the alkoxysilanes and silane coupling agent is 100 wt%. Furthermore, the silane coupling agent preferably comprises at least one epoxy group silane coupling agent, at a content of 10 wt% to 80 wt% where the total percentage of the alkoxysilanes and silane coupling agent is 100 wt%. Testing was therefore repeated using these combinations.

Combinations of alkoxysilane and silane coupling agents were used for repeat testing. Table 8 shows Mixing Examples with the contents of alkoxysilanes A, B and C which were satisfactory in Table 5 as parameters, with epoxy group silane coupling agents as silane coupling agents, and with the total contents including the alkoxysilanes set to 90 wt%. The remaining 10 wt% consisted of other alkoxysilanes, silane coupling agents and various additives.

Table 8

| Sample No. | Alkoxysilane (wt%) | | Epoxy group silane coupling agent content (wt%) |
|---|---|---|---|
| | Type | Content | |
| 52 | Alkoxysilane A (Flash point 8°C, Molecular weight 136) | 10 | 80 |
| 53 | | 30 | 60 |
| 54 | | 50 | 40 |
| 55 | | 80 | 10 |
| 56* | | 90 | 0 |
| 57* | Alkoxysilane B (Flash point 36°C, Molecular weight 164) | 5 | 85 |
| 58 | | 10 | 80 |
| 59 | | 40 | 50 |
| 60 | | 70 | 20 |
| 61* | | 85 | 5 |
| 62 | Alkoxysilane C (Flash point 40°C, Molecular weight 178) | 10 | 80 |
| 63 | | 30 | 60 |
| 64 | | 60 | 30 |
| 65 | | 80 | 10 |
| 66* | | 90 | 0 |
| A "*" symbol indicates that the sample falls outside of the range of the invention. | | | |

For each of the samples listed in Table 8, a coating agent was prepared according to conventional material specifications, comprising silane in an amount of 40 wt%, colloidal silica in an amount of 59 wt% (about 12% by solid weight) and phosphoric acid in an amount of 1 wt% based on a total coating agent content of 100 wt%, and coated under low temperature conditions (room temperature: 10°C, humidity: 50%) and high-humidity conditions (room temperature: 25°C, humidity: 80%), as poor conditions, and the properties were evaluated about 24 hours after coating. The results are shown in Tables 9-1 and 9-2.

Table 9-1

| Sample No. | Alkoxysilane (wt%) | | Finish | Whitening/ cracking | Mar proofness test (toughness test) | Static electrical characteristic X ($10^X \Omega$) | Next-day hardness | Solution resistance | | | | Coefficient of slip resistance | | Assessment |
|---|---|---|---|---|---|---|---|---|---|---|---|---|---|---|
| | Low-temperature conditions (room temperature: 10°C, humidity: 50%) | | | | | | | | | | | | | |
| | Type | Content | | | | | | Water | Alcohol | Acid | Alkali | Dry | Wet | |
| 52 | Alkoxysilane A (Flash point 8°C, Molecular weight 136) | 10 | Good | None | -9 | 9.2 | 3H | ○ | ○ | ○ | △ | 0.80 | 0.64 | ○ |
| 53 | | 30 | Good | None | -4 | 9.2 | 4H | ○ | ○ | ○ | △ | 0.78 | 0.63 | ○ |
| 54 | | 50 | Good | None | -5 | 9.5 | 5H | ○ | ○ | ○ | ○ | 0.77 | 0.62 | ○ |
| 55 | | 80 | Good | None | -9 | 9.9 | 3H | ○ | ○ | ○ | △ | 0.72 | 0.60 | ○ |
| 56* | | 90 | Weak gloss | Whitening | -20 | 9.9 | 2H | ○ | × | × | × | 0.70 | 0.58 | × |
| 57* | Alkoxysilane B (Flash point 36°C, Molecular weight 164) | 5 | Good | None | -15 | 9.5 | 2H | △ | △ | △ | △ | 0.81 | 0.69 | × |
| 58 | | 10 | Good | None | -10 | 9.6 | 3H | ○ | ○ | ○ | △ | 0.78 | 0.68 | ○ |
| 59 | | 40 | Good | None | -7 | 9.7 | 4H | ○ | ○ | ○ | △ | 0.76 | 0.67 | ○ |
| 60 | | 70 | Good | None | -5 | 9.9 | 3H | ○ | ○ | ○ | ○ | 0.74 | 0.65 | ○ |
| 61* | | 85 | Weak gloss | Whitening | -18 | 10.3 | 2H | △ | × | × | × | 0.71 | 0.63 | × |
| 62 | Alkoxysilane C (Flash point 40°C, Molecular weight 178) | 10 | Good | None | -10 | 9.5 | 3H | ○ | ○ | ○ | △ | 0.80 | 0.70 | ○ |
| 63 | | 30 | Good | None | -8 | 9.6 | 4H | ○ | ○ | ○ | △ | 0.78 | 0.68 | ○ |
| 64 | | 60 | Good | None | -6 | 9.8 | 3H | ○ | ○ | ○ | △ | 0.75 | 0.65 | ○ |
| 65 | | 80 | Good | None | -10 | 9.9 | 3H | ○ | ○ | ○ | △ | 0.74 | 0.62 | ○ |
| 66* | | 90 | Weak gloss | Whitening | -18 | 10.2 | 2H | △ | × | × | × | 0.73 | 0.60 | × |

A "*" symbol indicates that the sample falls outside of the range of the invention.

Table 9-2

| Sample No. | Alkoxysilane (wt%) | | Finish | Whitening/ cracking | Mar proofness test (toughness test) | Static electrical characteristic X ($10^X\Omega$) | Next-day hardness | Solution resistance | | | | Coefficient of slip resistance | | Assessment |
|---|---|---|---|---|---|---|---|---|---|---|---|---|---|---|
| | Type | Content | | | | | | Water | Alcohol | Acid | Alkali | Dry | Wet | |
| | | | | | High-humidity conditions (room temperature: 25°C, humidity: 80%) | | | | | | | | | |
| 52 | Alkoxysilane A (Flash point 8°C, Molecular weight 136) | 10 | Good | None | -8 | 9.1 | 3H | ○ | ○ | ○ | △ | 0.80 | 0.64 | ○ |
| 53 | | 30 | Good | None | -5 | 9.2 | 4H | ○ | ○ | ○ | △ | 0.78 | 0.64 | ○ |
| 54 | | 50 | Good | None | -7 | 9.6 | 4H | ○ | ○ | ○ | ○ | 0.77 | 0.62 | ○ |
| 55 | | 80 | Good | None | -10 | 9.9 | 3H | ○ | ○ | ○ | △ | 0.72 | 0.61 | ○ |
| 56* | | 90 | Weak gloss | Whitening | -18 | 10.0 | 2H | ○ | × | × | × | 0.71 | 0.60 | × |
| 57* | Alkoxysilane B (Flash point 36°C, Molecular weight 164) | 5 | Good | None | -13 | 9.6 | 2H | △ | △ | △ | △ | 0.81 | 0.70 | × |
| 58 | | 10 | Good | None | -10 | 9.7 | 3H | ○ | ○ | ○ | △ | 0.77 | 0.68 | ○ |
| 59 | | 40 | Good | None | -8 | 9.8 | 4H | ○ | ○ | ○ | △ | 0.77 | 0.67 | ○ |
| 60 | | 70 | Good | None | -5 | 9.7 | 3H | ○ | ○ | ○ | ○ | 0.75 | 0.67 | ○ |
| 61* | | 85 | Weak gloss | Whitening | -20 | 10.1 | 2H | △ | × | × | × | 0.72 | 0.65 | × |
| 62 | Alkoxysilane C (Flash point 40°C, Molecular weight 178) | 10 | Good | None | -9 | 9.6 | 3H | ○ | ○ | ○ | △ | 0.79 | 0.68 | ○ |
| 63 | | 30 | Good | None | -7 | 9.6 | 4H | ○ | ○ | ○ | △ | 0.78 | 0.66 | ○ |
| 64 | | 60 | Good | None | -7 | 9.8 | 3H | ○ | ○ | ○ | △ | 0.77 | 0.64 | ○ |
| 65 | | 80 | Good | None | -10 | 9.8 | 3H | ○ | ○ | ○ | △ | 0.75 | 0.63 | ○ |
| 66* | | 90 | Weak gloss | Whitening | -20 | 10.2 | 2H | △ | × | × | × | 0.73 | 0.60 | × |

A "*" symbol indicates that the sample falls outside of the range of the invention.

EP 4 206 272 A1

- The finish and the presence or absence of whitening and cracking were determined by visual observation of the outer appearance after applying the coating agent to vinyl chloride flooring tiles and confirming dryness to the touch.
- A mar proofness test was carried out instead of the toughness evaluation test. The mar proofness test was carried out by a scratch test with 10 back and forth passes using a wire brush with an approximately 750 g weight, judging the state of gloss deterioration (gloss value after marring - gloss value before marring). A score of 10 points or less was judged as satisfactory gloss deterioration.
- The static electrical characteristic (surface resistivity) was determined using a surface resistivity tester (YC-103), with 5 measurements each and recording the average value (X represents the 10-based index, and therefore the surface resistivity is $10^X\Omega$). The obtained static electrical characteristic (surface resistivity) was judged to be satisfactory at $\leq 1 \times 10^{10}\Omega$, as a level where static electricity is no longer sensed based on empirical data.
- The pencil hardness was based on JIS K5600. A sample prepared by coating onto a glass sheet or metal fragment was anchored on a horizontal stage with the coated surface facing upward and a pencil was held at an angle of about 45° and used to scratch the coated surface while pressing it as firmly as possible against the coated surface without breaking the lead core, along a length of about 1 cm at a uniform speed in the forward direction from the tester. The hardest pencil that did not cause breakage of the coated surface was recorded as the hardness number. A pencil hardness of 3H about 24 hours after construction has been empirically shown to be able to withstand damage due to abrasion by walking.
- The solution resistance values were confirmed by the method of JIS K5600, for water resistance (deionized water, liquid resistance; drip infusion method), alcohol resistance (70% ethanol, liquid resistance; drip infusion method), acid resistance (10% hydrochloric acid, liquid resistance; drip infusion method) and alkali resistance (saturated sodium hydroxide solution, liquid resistance; absorption medium method). An absorber disc exposed to test solution by dropping or soaking was set on the test piece and allowed to stand for 1 hour, after which it was removed and thoroughly washed. Blistering and coating film damage were immediately observed, and the evaluation assignment was "∘" if the condition was unchanged from before evaluation, "Δ" if the condition changed but was restored to the original condition during a recovery period of 24 hours, or "×" if the condition changed to blistering, peeling or the like without restoration to the original condition during the recovery period. The overall judgment is satisfactory if 3 or more are evaluated as "∘", 1 or fewer as "Δ" and none as "×".
- The slidability test was conducted according to the Resilient Polymer Floor Coverings Test Method of JIS A1454. A vinyl chloride flooring tile is coated with the coating agent to produce a sample, and a portable pull slip meter (ONO·PPSM) is used to measure the tensile force (P) when pulling a sliding piece (rubber sheet with hardness: A80, thickness: 5 mm) over the test piece in a clean and dry state and in a wet state, recording the maximum tensile force (Pmax) to be the maximum value generated when the sliding piece begins to slide, and calculating the coefficient of slip resistance (C.S.R). Satisfactory evaluation is 0.7 to 0.8 in a dry state and 0.6 to 0.8 in a wet state.

```
Coefficient of slip resistance (C.S.R) = Maximum tensile

force (Pmax)/vertical force: 785 N (W)
```

- The assessments of "o" in Table 9-1 and Table 9-2 indicate "satisfactory finish, crack resistance, toughness (mar proofness), static electrical characteristic, pencil hardness, solution resistance and slidability", and the assessments of "×" indicate "problem with any one of finish, crack resistance, toughness (mar proofness), static electrical characteristic, pencil hardness, solution resistance or slidability".

Based on the test results shown in Table 9-1 and Table 9-2, a greater alkoxysilane content (lower epoxy group silane coupling agent content) tended to result in a weaker glossy finish and more whitening. Similarly, the mar proofness, next-day hardness, solution resistance and slidability when wet tended to have values outside of the acceptable ranges. This was attributed to excessively high hardness of the coating film which produced a brittle material. With a low alkoxysilane content (a high epoxy group silane coupling agent content), on the other hand, the hardening was inadequate, leading to a lack of next-day hardness and mar proofness, and insufficient solution resistance. It is therefore necessary to determine the optimum values.

The results described above demonstrate that the inorganic glass coating agent is preferably one wherein the alkoxysilane is a trifunctional alkoxysilane, with a flash point of no higher than 40°C as equivalent to a class I petroleum or a class II petroleum, and a molecular weight of 180 or lower, and wherein the content of the alkoxysilane is 10 wt% to 80 wt%, where the total percentage of the alkoxysilanes and silane coupling agent is 100 wt%. Furthermore, it was found to be preferable for the silane coupling agent to comprise at least one epoxy group silane coupling agent, at a content of 10 wt% to 80 wt% where the total percentage of the alkoxysilanes and silane coupling agent is 100 wt%.

[Advantageous Effects of Invention]

According to the present invention, by selecting an alkoxysilane having a relatively low molecular weight and low flash point, with high reactivity, it is possible to provide stabilized drying and hardening properties not only under ordinary conditions but also under poor conditions, and by selection and use of the appropriate content for the alkoxysilane and silane coupling agent it is possible to obtain stabilized drying and hardening properties and satisfactory next-day hardness and solution resistance even under low temperature conditions, under high-humidity conditions, and with flooring materials having strong suction properties, helping to provide the performance required for a protective film. The invention allows construction to be carried out in a stable manner in a wider variety of locations than previously, such as in cold climates or high temperature, high humidity regions such as Asia.

According to the invention as described above, according to claim 1 the drying and hardening properties of the coating agent are improved and stabilized drying and hardening properties can be obtained even with a suction-type flooring material under low temperature, high-humidity conditions, but there is still a need to reduce whitening and cracking caused by rapid hardening shrinkage, or to compensate for weakening of the coating film itself, while the performance of the coating film can be greatly improved by using one or more epoxy group silane coupling agents to compensate for the static electrical characteristics, recoat properties and wet/dry slidability.

According to this invention it is possible to provide an inorganic glass coating agent having a next-day hardness of 3H or greater, and also next-day solution resistance (water resistance, alcohol resistance, acid resistance and alkali resistance)." By stably increasing the next-day hardness to 3H, it becomes possible to provide a high-hardness, inorganic glass coating agent that can stably exhibit hardness for the coating film, even up to an original final hardness of 10H.

The present invention makes it possible to obtain stable drying and hardening properties even under conditions which have been problematic in the past, such as during construction under low temperature conditions or construction under high-humidity conditions, or construction with suction-type flooring materials. The present invention thereby allows construction to be carried out at a wider variety of locations than in the past, permitting even greater use in the future in new maintenance systems that can serve as replacements for waxing.

**Claims**

1. An inorganic glass coating agent composed mainly of an alkoxysilane and silane coupling agent, wherein the alkoxysilane is a trifunctional alkoxysilane, with a flash point of no higher than 40°C as equivalent to a class I petroleum and/or a class II petroleum, and a molecular weight of 180 or lower, and wherein at least one of the alkoxysilanes is present at 10 wt% to 80 wt%, where the total percentage of the alkoxysilanes and silane coupling agent is 100 wt%.

2. The inorganic glass coating agent according to claim 1, wherein the silane coupling agent comprises at least one epoxy group silane coupling agent at a content of 10 wt% to 80 wt%, where the total percentage of the alkoxysilanes and silane coupling agent is 100 wt%.

3. The inorganic glass coating agent according to any one of claims 1 and 2, wherein the alkoxysilane and silane coupling agent composed mainly of a trifunctional alkoxysilane and an epoxy group silane coupling agent is mixed with aqueous and/or solvent-based colloidal silica, water and/or a solvent as a diluting solvent, and a catalyst.

**EP 4 206 272 A1**

Europäisches
Patentamt
European
Patent Office
Office européen
des brevets

# EUROPEAN SEARCH REPORT

Application Number

EP 22 21 3077

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 3 093 279 A1 (KYUSHU HIGHTEC CORP [JP]) 16 November 2016 (2016-11-16) * paragraph [0042]; example 1; table 5 * ----- | 1-3 | INV. C08K3/36 C08L83/06 C09D5/00 C09D183/06 |
| X | US 2012/168649 A1 (ISHIBAI YOICHI [JP] ET AL) 5 July 2012 (2012-07-05) * example 4; table 1 * ----- | 1,2 | |

TECHNICAL FIELDS
SEARCHED      (IPC)

C08K
C09J
C09G
C08L
C09D

The present search report has been drawn up for all claims

| Place of search | Date of completion of the search | Examiner |
|---|---|---|
| Munich | 22 May 2023 | Pollio, Marco |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

24

## ANNEX TO THE EUROPEAN SEARCH REPORT
## ON EUROPEAN PATENT APPLICATION NO.

EP 22 21 3077

This annex lists the patent family members relating to the patent documents cited in the above-mentioned European search report.
The members are as contained in the European Patent Office EDP file on
The European Patent Office is in no way liable for these particulars which are merely given for the purpose of information.

22-05-2023

| Patent document cited in search report | | Publication date | Patent family member(s) | | Publication date |
|---|---|---|---|---|---|
| EP 3093279 | A1 | 16-11-2016 | CN | 106147595 A | 23-11-2016 |
| | | | EP | 3093279 A1 | 16-11-2016 |
| | | | JP | 2016210670 A | 15-12-2016 |
| | | | US | 2016332920 A1 | 17-11-2016 |
| US 2012168649 | A1 | 05-07-2012 | CN | 102803413 A | 28-11-2012 |
| | | | HK | 1176961 A1 | 09-08-2013 |
| | | | JP | 5851836 B2 | 03-02-2016 |
| | | | JP | WO2010143645 A1 | 22-11-2012 |
| | | | KR | 20120037389 A | 19-04-2012 |
| | | | MY | 160129 A | 28-02-2017 |
| | | | SG | 176736 A1 | 30-01-2012 |
| | | | TW | 201111459 A | 01-04-2011 |
| | | | US | 2012168649 A1 | 05-07-2012 |
| | | | WO | 2010143645 A1 | 16-12-2010 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 4957926 B
- JP 6775171 B
- JP 6065247 B
- JP 2016210670 A